# EUROPÄISCHE PATENTANMELDUNG

(11) **EP 1 231 536 A2**
(43) Veröffentlichungstag der Anmeldung: **14.08.2002**
(21) Anmeldenummer: 02001628.3
(22) Anmeldetag: 24.01.2002
(51) Int. Cl.: G06F 9/45

(54) **Verfahren und System zur funktionsmässigen Erweiterung einer Telekommunikationsanlage**

(30) Priorität: 08.02.2001 DE 10105729
(71) Anmelder: Tenovis GmbH & Co. KG, 60326 Frankfurt am Main (DE)
(72) Erfinder: Lüdicke, Ulrich, 65779 Kelkheim (DE); Bernd, Heinrich, 61184 Karben (DE); Rosenkranz, Jürgen, 60437 Frankfurt am Main (DE); Fritz, Norbert, 85244 Röhrmoos (DE); Mohr, Peter, 65510 Idstein (DE); Weiss, Peter, 63303 Dreieich (DE); Trunk, Rainer, 60388 Frankfurt am Main (DE); Fröhlich, Hans-Joachim, 63069 Offenbach (DE); Kaul, Doris, 61137 Schöneck (DE); Hohmann, Ralf, 61381 Friedrichsdorf (DE); Schmidt, Werner, 63762 Grossostheim (DE); Kühlinger, Roman, 64572 Büttelborn (DE); Rössler, Georg, 60489 Frankfurt am Main (DE)
(74) Vertreter: Patentanwaltskanzlei WILHELM & BECK

(57) **Zusammenfassung**

Die Erfindung betrifft ein Verfahren zur funktionsmäßigen Erweiterung einer Telekommunikationsanlage. Die Telekommunikationsanlage (1) weist ein Betriebssystem (3) mit einer Recheneinheit (7) und einem Programmspeicher (8) zum Speichern von einem Maschinencode auf. Zunächst wird mit einem Umwandlungsprogramm (14) von einem ersten Programmcode (10) einer ersten Programmiersprache in einen zweiten Programmcode (11) einer zweiten Programmiersprache umgewandelt. Anschlieβend wird der zweite Programmcode (11) in einen ersten Maschinencode (16) mit Hilfe eines Compilers kompiliert. In einem dritten Programmcode (17), der zusätzliche Funktionen zur Verfügung stellt und der in der zweiten Programmiersprache programmiert ist, wird in einen zweiten Maschinencode (18) kompiliert. Erster Maschinencode (16) und zweiter Maschinencode (18) werden in dem Programmspeicher (22) gespeichert. Es ist ferner ein Adaptions-Programmmodul (12) vorgesehen, das in einen Adaptionsmaschinencode umgewandelt wird, um im ersten Programmcode (10) enthaltene Aufrufe von Systemfunktionen einer ersten Programmumgebung in Aufrufe von Systemfunktionen einer zweiten Programmumgebung umzuwandeln.

## Beschreibung

Die Erfindung betrifft ein Verfahren und ein System zur funktionsmäßigen Erweiterung einer Telekommunikationsanlage.

Telekommunikationsanlagen umfassen in der Regel eine Vielzahl von Komponenten, denen Funktionen der Telekommunikationsanlage zugeordnet sind. Die Funktionen werden üblicherweise mit Hilfe von Programmen realisiert, die in einer Betriebssystemumgebung von einer jeweiligen Recheneinheit, d.h. einem Prozessor, ausgeführt werden. Die Betriebssystemumgebung ist üblicherweise eine Software, die auf den Prozessor abgestimmt ist und ein geeignetes Protokoll zur Kommunikation mit den an die Recheneinheit angeschlossenen Hardwarekomponenten oder mit anderen Komponenten der Telekommunikationsanlage zur Verfügung stellt. Ferner stehen für eine Betriebssystemumgebung bestimmte Programmierplattformen zur Verfügung

Um die Leistungsfähigkeit eines solchen Systems zu erhöhen, ist es heutzutage zumeist unumgänglich, den jeweiligen Prozessor durch einen leistungsfähigeren Prozessor zu ersetzen, insbesondere wenn man die Funktionalität des Systems verbessern oder erweitern will. Eine Änderung des Prozessors führt dann gewöhnlich auch zu einer Änderung der Betriebssystemumgebung.

Dabei ist es möglich, dass bei der neuen Betriebssystemumgebung die bisher verwendete Programmierplattform mit der entsprechenden Programmiersprache nicht unmittelbar verfügbar ist. Das gilt insbesondere dann, wenn es sich bei der vorherigen Programmierplattform bzw. Betriebssystemumgebung nicht um eine Standardsoftware handelt, sondern um eine anwendungsspezifische Lösung. Ist es dann notwendig, die Funktionalität des Systems durch weitere, neue Funktionen zu verbessern, so werden die neuen Funktionen vorzugsweise in einer Programmiersprache programmiert, für die eine Programmierplattform in der neuen Betriebssystemumgebung zur Verfügung steht, um somit die Leistungsfähigkeit von Prozessor und Betriebssystemumgebung in vollem Umfang ausnutzen zu können. Die in der bisherigen Programmiersprache programmierten Funktionen müssen in aller Regel manuell in eine neue Programmiersprache umgesetzt werden. Dabei müssen Schnittstellenprotokolle, wie z.B. Kommunikationsprotokolle, Meldungsformate, Datenformate u.a., auf die neue Programmiersprache, die neue Programmierplattform bzw. die neue Betriebssystemumgebung angepasst werden, damit die in der bisherigen Programmiersprache realisierten Funktionen mit den Hardwarekomponenten und mit den neu hinzugefügten Funktionen zusammenarbeiten können.

Es ist Aufgabe der Erfindung, ein verbessertes Verfahren und ein verbessertes System zur Verfügung zu stellen, um die Funktionen einer Telefonanlage auf einfache Weise zu erweitern, zu ergänzen und/oder zu modifizieren.

Diese Aufgabe wird durch das Verfahren nach Anspruch 1 und das System nach Anspruch 9 gelöst.

Die Erfindung betrifft die funktionsmäßige Erweiterung einer Telekommunikationsanlage, bei der z.B. aufgrund eines Systemwechsels in einer oder mehreren Komponenten (z.B. Wechsel der Recheneinheit) eine bisherige Betriebssystemumgebung durch eine neue Betriebssystemumgebung ersetzt werden muss. Da häufig die ursprüngliche Programmierplattform mit einer ersten Programmiersprache für die neue Betriebssystemumgebung nicht länger zur Verfügung steht, wird mit der neuen Betriebssystemumgebung eine neue Programmierplattform mit einer zweiten Programmiersprache eingeführt.

Die Funktionen, die für die bisherige Betriebssystemumgebung als ein erster Programmcode in einer ersten Programmiersprache realisiert wurden, sollen in die neue Betriebssystemumgebung möglichst unverändert übernommen werden, so dass dieselben Funktionen auch mit der neuen Recheneinheit ausgeführt werden können. Es besteht jedoch weiterhin die Notwendigkeit, die bisher in der ersten Programmiersprache realisierten Funktionen zu erweitern und zu verbessern, um die Funktionen z.B. an eine veränderte Hardware bzw. an die wachsenden Anforderungen an die Telekommunikationsanlage anzupassen. Gemäß der bisherigen Vorgehensweise wurde der Programmcode in der ersten Programmiersprache erstellt und anschließend direkt mit Hilfe eines Umwandlungsprogramms in einen ausführbaren Maschinencode umgewandelt.

Das in den Funktionen realisierte Know-how liegt zumeist personengebunden vor. Um die Pflege, die Verbesserung und/oder die Erweiterung der ursprünglichen Funktionen in gewohnter Weise vornehmen zu können, ist man üblicherweise an die Programmierplattform gebunden, mit der die betreffenden Personen vertraut sind. Um eine neue Programmierplattform zu benutzen, müssen sich diese Personen in die neue Programmierplattform einarbeiten, bevor sie ihr Know-how im Bereich Telekommunikationsanlagen in einen Programmcode der zweiten Programmiersprache umsetzen können. Dies ist zeit- und kostenaufwendig.

Es ist daher sinnvoll, diesen Personen auch nach der Änderung der Betriebssystemumgebung die Möglichkeit zu geben, die jeweiligen Funktionen in einem Programmcode der ersten Programmiersprache zu bearbeiten. Es sollte demnach eine Programmierplattform zur Verfügung gestellt werden, durch die sie in gewohnter Weise die bisher realisierten Funktionen durch den Programmcode der ersten Programmiersprache bearbeiten können, ohne auf die Anforderungen der neuen Betriebssystemumgebung Rücksicht nehmen zu müssen.

Dazu ist erfindungsgemäß vorgesehen, einen ersten Programmcode in der ersten Programmiersprache mit einem Umwandlungsprogramm in einen zweiten Programmcode einer zweiten Programmiersprache umzuwandeln. Die zweite Programmiersprache ist so gewählt, dass sie auf einer Programmierplattform für die neue Betriebssystemumgebung zur Verfügung steht.

In einem weiteren Schritt wird der zweite Programmcode der zweiten Programmiersprache in einen ersten Maschinencode umgewandelt, der in einem Programmspeicher abgelegt wird und von der Recheneinheit ausführbar ist.

Ein dritter Programmcode ist vorgesehen, der zusätzliche Funktionen umfasst, die nach dem Wechsel der Betriebssystemumgebung der Telekommunikationsanlage erstellt wurden. Die zusätzlichen Funktionen sollen den existierenden Funktionen hinzugefügt werden. Der dritte Programmcode ist vorzugsweise in der zweiten Programmiersprache realisiert, um z.B. die Leistungsfähigkeit des Systems mit der neuen Betriebssystemumgebung, des Prozessors bzw. der Programmierplattform in größerem Umfang auszuschöpfen, als es mit dem zweiten Programmcode möglich ist, der durch Umwandlung aus dem ersten Programmcode der ersten Programmiersprache gebildet wurde. Der dritte Programmcode wird auf vergleichbare Weise wie der zweite Programmcode in einen zweiten Maschinencode umgewandelt. Der zweite Maschinencode wird wie zuvor der erste Maschinencode danach in dem Programmspeicher abgelegt.

Der Programmspeicher enthält somit die in der ersten Programmiersprache und die nach dem Wechsel der Betriebssystemumgebung in der zweiten Programmiersprache realisierten Funktionen als ersten und zweiten Maschinencode, so dass die Recheneinheit der Telekommunikationsanlage gemäß dieser Maschinencodes betrieben werden kann.

Das erfindungsgemäße Verfahren hat den Vorteil, dass die für die alte Betriebssystemumgebung entwickelten Funktionen, die in dem ersten Programmcode der ersten Programmiersprache realisiert sind, in ihrer ursprünglichen Programmierplattform modifiziert, verbessert und ergänzt werden können. Dadurch kann vermieden werden, dass der erste Programmcode von einem Programmierer zuvor in einen Programmcode der zweiten Programmiersprache übersetzt werden muss bzw. dass der Programmierer diese Änderungen in der zweiten Programmiersprache vornehmen muss. Dies ist insbesondere deswegen vorteilhaft, da es somit für den Programmierer, der ein speziellen Know-how über eine Telekommunikationsanlage besitzt, nicht erforderlich ist, sein Wissen in einer neuen, ihm zunächst nicht vertrauten (zweiten) Programmiersprache zu implementieren.

Mit dem erfindungsgemäßen Verfahren hat der Programmierer daher die Möglichkeit, die bisher verwendete (erste) Programmiersprache weiterhin anzuwenden, und die im ersten Programmcode realisierten Funktionen in der ersten Programmiersprache für die neue Betriebssystemumgebung zu programmieren. Dies spart Zeit und Kosten, da der Programmierer von dem Wechsel der Betriebssystemumgebung nicht betroffen ist und den Wechsel der Betriebssystemumgebung im wesentlichen nicht bemerkt. Ferner ermöglicht das erfindungsgemäße Verfahren, die bisherigen Funktionen durch neue Funktionen zu ergänzen, wobei die neuen Funktionen in der zweiten Programmiersprache implementiert werden können.

Weitere vorteilhafte Ausgestaltungen der Erfindung sind in den abhängigen Ansprüche angegeben.

So ist vorteilhafterweise vorgesehen, dass aus dem ersten Programmcode der ersten Programmiersprache ein Meldungsformat-Programmmodul in der zweiten Programmiersprache erzeugt wird, wobei das Meldungsformat-Programmmodul so gestaltet ist, dass das Meldungsformat-Programmmodul ein Meldungsformat des ersten Programmcodes in der zweiten Programmiersprache darstellt. Das Meldungsformat-Programmmodul wird anschließend in einen Meldungsformat-Maschinencode umgewandelt. Dadurch kann vorteilhaft erreicht werden, dass die Kommunikation mit Komponenten des Systems, die üblicherweise durch festgelegte Kommunikationsprotokolle durchgeführt wird, auch nach dem Wechsel der Betriebssystemumgebung bzw, der Programmierplattform beibehalten werden kann.

Weiterhin kann vorgesehen sein, dass aus dem ersten Programmcode der ersten Programmiersprache ein Datenformat-Programmmodul in der zweiten Programmiersprache erzeugt wird, wobei das Datenformat-Programmmodul so gestaltet ist, dass das Datenformat-Programmmodul ein Datenformat des ersten Programmcodes in der zweiten Programmiersprache darstellt. Anschließend wird das Datenformat-Programmmodul in einen Datenformat-Maschinencode umgewandelt. Auf diese Weise ist es möglich, dass die in der ersten Programmiersprache realisierten Funktionen und die in der zweiten Programmiersprache realisierten Funktionen Daten z.B. in einem Datenspeicher ablegen können, wobei die Datenformate miteinander übereinstimmen. Um die Programmierung des ersten Programmcodes, insbesondere die Wahl der Datenformate, vom Wechsel der Betriebssystemumgebung möglichst unbeeinflusst zu lassen, sollte das Datenformat des zweiten Programmcodes vollständig auf das Datenformate des ersten Programmcodes angepasst werden. Dies wird erreicht, indem die Datenformate durch das Datenformat-Programmmodul so beschrieben werden, dass der zweite Programmcode die Datenformate gemäß dem ersten Programmcode enthält.

Um das Meldungsformat zur Kommunikation der Funktionen untereinander sowie mit den Peripheriebaugruppen zu vereinheitlichen, ist vorgesehen, dass der Programmcode in der ersten Programmiersprache und der Programmcode in der zweiten Programmiersprache das jeweils gleiche Meldungsformat aufweisen.

Vorteilhafterweise kann weiterhin ein Adaptionsmodul vorgesehen sein, das in einen Adaptions-Maschinencode umgewandelt wird, um im ersten Programmcode enthaltene Aufrufe von Systemfunktionen einer ersten Programmumgebung in Aufrufe von Systemfunktionen einer zweiten Programmumgebung umzuwandeln. Unter Systemfunktionen werden in diesem Zusammenhang Funktionen verstanden, die nicht im ersten Programmcode realisiert sind, sondern von der Betriebssystemumgebung zur Verfügung gestellt werden. Systemfunktionen können beispielsweise Steuerbefehle für Hardwarekomponenten, Speichersteuerbefehle für Festplattenspeicher o.ä. sein.

Gemäß einer bevorzugten Ausführungsform kann vorgesehen sein, dass ein vierter Programmcode, der Funktionen in einer weiteren, dritten Programmiersprache umfasst, in einen dritten Maschinencode umgewandelt werden. Der dritte Maschinencode wird im Programmspeicher gespeichert und stellt einen für den Prozessor ausführbaren Code dar. Auf diese Weise hat man den Vorteil, dass man Funktionen in verschiedenen Programmiersprachen einfach auf eine neue Betriebssystemumgebung anpassen kann, wobei die Funktionen in der jeweiligen Programmiersprache bequem gewartet, verbessert und ergänzt werden können. Das hat insbesondere den Vorteil bereits vorhandene Funktionen, z.B. Standardfunktionen aus einer Programmbibliothek, ohne Modifikation des Quelltestes, d.h. Übersetzung in eine andere Programmiersprache, übernommen werden können.

Ein Ausführungsbeispiel der Erfindung wird im folgenden anhand der beigefügten Zeichnungen näher erläutert. Es zeigen:
Fig. 1 eine Architektur einer Steuerung einer Telekommunikationsanlage vor einer funktionsmäßigen Erweiterung;
Fig. 2 eine Architektur einer Steuerung einer Telekommunikationsanlage nach einer funktionsmäßigen Erweiterung; und
Fig. 3 ein Flussdiagramm des erfindungsgemäßen Verfahrens zur funktionsmäßigen Erweiterung einer Telekommunikationsanlage.

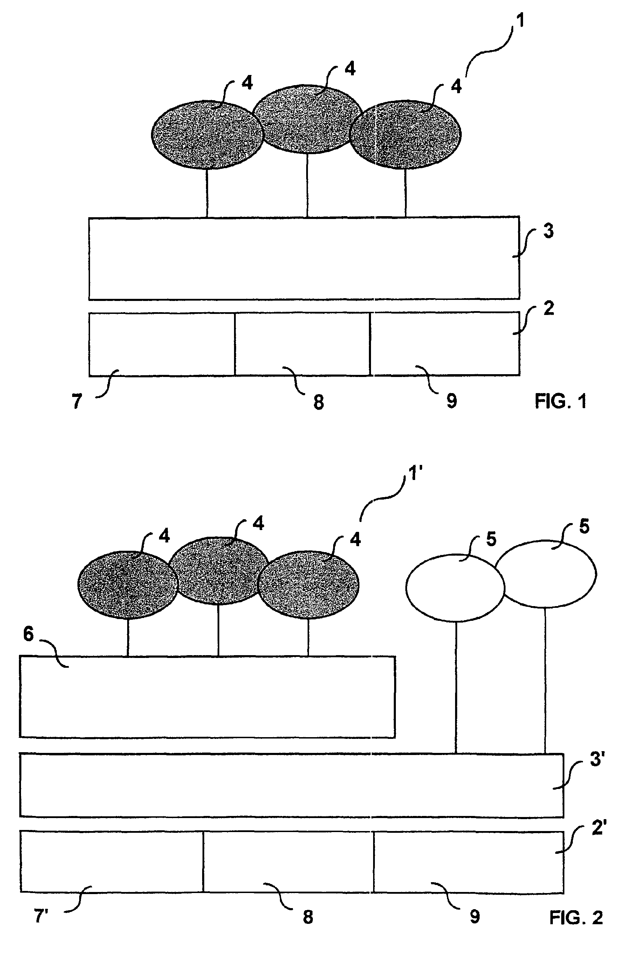

In Fig. 1 ist in einer Blockdarstellung eine Steuerung einer Telekommunikationsanlage 1 gezeigt, wie sie vor einer funktionsmäßigen Erweiterung bzw. vor einem Wechsel der Betriebssystemumgebung und/oder der Recheneinheit besteht. Das Schaubild zeigt zwei Blöcke, durch die eine Hardware 2 und ein Betriebssystem 3 dargestellt sind. Die Hardware 2 umfasst einen Prozessor 7, Speicher 8 sowie alle für den Betrieb einer Telekommunikationsanlage notwendigen Peripherieelemente 9. Das Betriebssystem 3 ist eine Software, die im Speicher 8 gespeichert ist. Das Betriebssystem 3 ist anwendungsspezifisch, d.h. speziell für die jeweilige Telekommunikationsanwendung bzw. Hardware 2 konzipiert, und stellt eine Plattform zur Verfügung, in der Funktionsprogramme 4 ausgeführt werden. Das Betriebssystem 3 liefert die notwendigen Grundfunktionen zur Kommunikation mit dem Prozessor 7, dem Speicher 8, den Peripherieelementen 9, wie z.B. Netzwerken, Anzeigevorrichtungen usw.. Die Funktionsprogramme 4 sind in der Programmiersprache PASCAL erstellt und werden mit einem entsprechenden PASCAL-Compiler in einen Maschinencode umgewandelt, der dem Speicher 8 zur Ausführung durch die Recheneinheit 7 gespeichert wird.

In Fig. 2 ist ein Schaubild für eine neue Telekommunikationsanlage 1' gezeigt, die mit einer veränderten Hardware 2', z.B. mit einem neuen Prozessor 7', ausgestattet ist. Ein neuer Prozessor erfordert in aller Regel ein darauf angepasstes, neues Betriebssystem 3', um die vom Prozessor zur Verfügung gestellten Funktionen auf die richtige Weise ansprechen zu können. Die neue Hardware 2' weist den neuen Prozessor 7', den Speicher 8 und die Peripherieelemente 9 auf.

Die veränderte Hardware 2' und das neue Betriebssystem 3' sollen weiterhin mit den bisherigen Funktionsprogrammen 4 betreibbar sein. Mit dem Maschinencode, in den die bisherigen Funktionen 4 umgewandelt wurden, kann die neue veränderte Hardware 2' und das neue veränderte Betriebssystem 3' in aller Regel jedoch nicht betrieben werden. Folglich muss der ursprüngliche Programmcode, der die Funktionen enthält, an die neue Hardware 2' und/oder die neue Betriebssystemumgebung 3' angepasst werden.

Die Funktionen 4, wie in Fig. 2 dargestellt, sind dieselben Funktionen, die man bisher in der Telekommunikationsanlage 1 nach Fig. 1 verwendet hat. Um die Funktionen 4 an die Erfordernisse des neuen Betriebssystems 3' und der veränderten Hardware 2' anzupassen, wird die Anpassung des ursprünglichen Programmcodes mit Hilfe eines Adaptionsmoduls 6 durchgeführt. Das Adaptionsmodul 6 ist im wesentlichen ein Programmcode-Modul, das beim Kompilieren mit dem Programmcode verknüpft wird. Mit dem Adaptionsmodul 6 wird erreicht, dass alle Funktionsaufrufe, die der ursprüngliche Programmcode enthält und die sich auf Funktionen beziehen, die von der ursprünglichen Betriebssystemumgebung bzw. Hardware zur Verfügung gestellt wurden, modifiziert werden, so dass sich die Funktionsaufrufe nach der Umwandlung auf gleiche oder vergleichbare Funktionen der neuen Betriebssystemumgebung bzw. Hardware beziehen. Auf diese Weise kann erreicht werden, dass das Kompilieren eines Programmcodes, der für eine andere Systemumgebung erstellte Funktionsaufrufe enthält, dennoch zu einem lauffähigen Maschinencode führt.

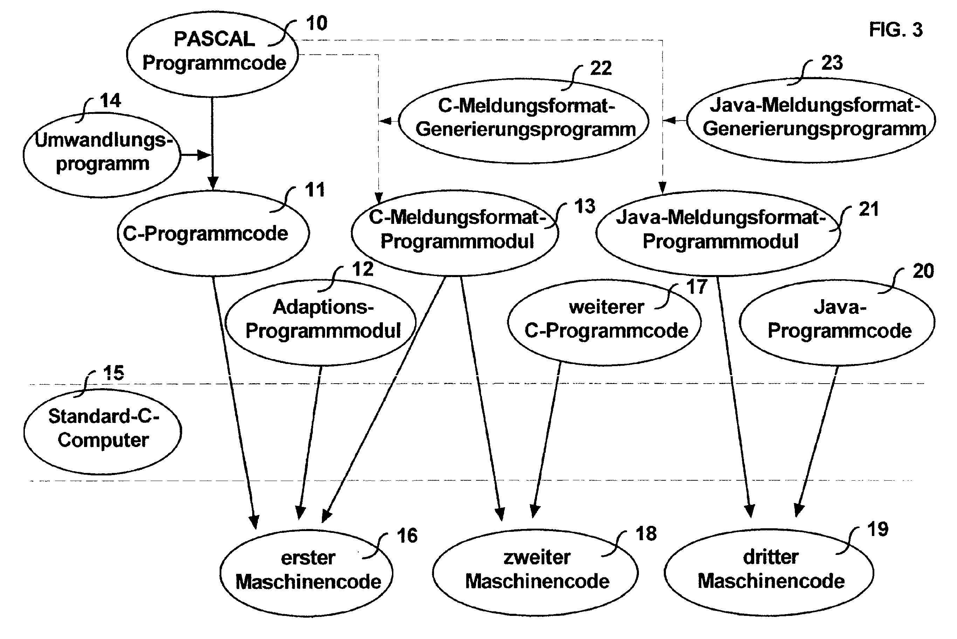

Eine Ausführungsform des erfindungsgemäßen Verfahren wird im Folgenden in Verbindung mit dem Diagramm der Fig. 3 näher erläutert. Das Diagramm zeigt den Ablauf zur Erstellung von Maschinencodes für eine neue Betriebssystemumgebung bzw. für eine neue Recheneinheit eines Telekommunikationssystems. Fig. 3 zeigt einen PASCAL-Programmcode 10, wie er in einem ursprünglichen Telekommunikationssystem 1 verwendet wurde. Dieser wurde zuvor mit einem auf dem ursprünglichen System zur Verfügung stehenden PASCAL-Compiler in einen ausführbaren Maschinencode kompiliert.

Bei einem Wechsel des Betriebssystems, z.B. aufgrund einer neuen Hardware 2 steht jedoch der ursprünglich verwendete PASCAL-Compiler nicht weiter zur Verfügung. Um zu vermeiden, den PASCAL-Programmcode 10 von Hand in eine weitere Programmiersprache, für die eine Programmier-Plattform zur Verfügung steht, umzusetzen, ist nun vorgesehen, dies mit Hilfe eines Umwandlungsprogramms 14 durchzuführen. Unter Verwendung des Umwandlungsprogramms 14 wird der PASCAL-Programmcode 10 in einen C-Programmcode 11 übersetzt. Die Umwandlung wird durchgeführt, indem die Befehle des PASCAL-Programmcode 10 in die entsprechenden Befehle eines C-Programmcodes 11 umgeschrieben werden und Funktionsaufrufe einer PASCAL-Standardfunktions-Bibliothek durch Funktionsaufrufe der C-Standardfunktions-Bibiliothek der neuen Programmierumgebung ersetzt werden.

Man erhält nun den C-Programmcode 11, der im wesentlichen die in den PASCAL-Programmcode 10 realisierten Funktionen darstellt. Der C-Programmcode 11 ist also geeignet, nach einem Kompilieren mit einem Standard-C-Compiler 15 als einen ersten Maschinencode 16 in dem neuen Telekommunikationssystem 1' betrieben zu werden. Um zu gewährleisten, dass Aufrufe von Systemfunktionen, die z.B. von der Betriebssystemumgebung zur Verfügung gestellt werden, durch den C-Programmcode 11 gemäß der neuen Betriebssystemumgebung durchgeführt werden, muss ein Adaptions-Programmmodul 12 vorgesehen werden, das Funktionen umfasst, die sicherstellen, dass die Funktionsaufrufe aus dem C-Programmcode 11 die entsprechenden Systemfunktionen aufrufen. Das Adaptions-Programmmodul 12 wird erstellt, indem man die ursprüngliche Betriebssystemumgebung und die neue Betriebssystemumgebung sowie die Hardware miteinander vergleicht und z.B. die ursprünglichen Systemaufrufe auf die neuen Systemaufrufe abbildet. Das Adaptions-Programmmodul 12 wird als ein Programmcode in der zweiten Programmiersprache erstellt und nach dem Kompilieren dem ersten Maschinencode 16 z.B. mit Hilfe einer (nicht gezeigten) Linker-Einheit hinzugefügt.

Die in dem PASCAL-Programmcode 10 enthaltenen Meldungsformate sollen möglichst beibehalten werden, um das Vornehmen von Änderungen des PASCAL-Programmcodes 10 zu vermeiden. Die Meldungsformate dienen der Kommunikation mit Funktionselementen, wie z.B. Peripheriebauelementen, Netzwerken u.ä. Die Meldungsformate stellen somit z.B. Schnittstellenprotokolle dar, mit denen die im PASCAL-Programmcode 10 realisierten Funktionen, mit anderen Funktionselementen kommunizieren können. So ist ein C-Meldungsformat-Programmmodul 13 vorgesehen, das es ermöglicht, die Meldungsformate gegenüber den in dem PASCAL-Programmcode 10 realisierten Meldungsformate beizubehalten. Vorteilhafterweise wird dieses Modul automatisch mit einem C-Meldungsformat-Generierungsprogramm 22 erzeugt. Das C-Meldungsformat-Programmmodul 13 wird ebenso wie der C-Programmcode 11 und das Adaptions-Programmmodul 12 kompiliert und dem ersten Maschinencode 16, der z.B. den kompilierten C-Programmcodes 11 und das kompilierte Adaptions-Programmmoduls 12 enthält, mit Hilfe der Linker-Einheit hinzugefügt.

Um der Telekommunikationsanlage 1 zusätzliche Funktionen hinzuzufügen, ist vorgesehen, die zusätzlichen Funktionen in einem weiteren C-Programmcode 17 zu realisieren. Da die PASCAL-Programmierplattform üblicherweise nur die Funktionen zur Verfügung stellt, die in der alten Programmierumgebung durchführbar waren, ist es zum Nutzen der nach dem Wechsel der Betriebssystemumgebung neu hinzugekommenen Funktionalität sinnvoll, zusätzliche Funktionen für eine Programmierplattform zu entwickeln, die für die neue Betriebssystemumgebung zur Verfügung steht. Das Programmieren der zusätzlichen Funktionen wird deshalb vorzugsweise in der Programmiersprache durchgeführt, in die der PASCAL-Programmcode 10 umgewandelt wird, also in C. Der weitere C-Programmcode 17, durch den die zusätzlichen Funktionen realisiert sind, wird, wie zuvor beschrieben, mit dem Standard-C-Compiler 15 in einen zweiten Maschinencode 18 kompiliert. Damit die zusätzlichen Funktionen zum Kommunizieren mit weiteren Funktionselementen das gleiche Meldungsformat verwenden, wie die ursprünglichen Funktionen, wird dem zweiten Maschinencode 18 aus dem weiteren C-Programmcode 17 der kompilierte Code des C-Meldungsformat-Programmmoduls 13 mit Hilfe der Linker-Einheit hinzugefügt. Auf diese Weise erreicht man, dass zum einen die Meldungsformate, die der ursprüngliche PASCAL-Programmcode 10 vorgesehen hat, beibehalten werden können und andererseits diese Meldungsformate auch für die zusätzlichen Funktionen, die durch den C-Programmcode 14 realisiert sind, zur Verfügung stehen.

Auf ähnliche Weise wie das C-Meldungsformat-Programmmodul 13 kann auch ein C-Datenformat-Programmmodul (nicht gezeigt) vorgesehen sein, in dem Datenformate, wie sie zuvor durch den PASCAL-Programmcode 10 in Verbindung mit der entsprechenden PASCAL-Programmierplattform definiert waren, auch in Verbindung mit der neuen C-Programmierplattform verwendet werden. Das C-Datenformat-Programmmodul beschreibt Datenformate, die systemintern z.B. zum Speichern von Daten in einen Datenspeicher verwendet werden. So kann erreicht werden, dass die Datenformate, die im PASCAL-Programmcode 10 definiert sind, bei einer Umstellung auf eine neue Betriebssystemumgebung nicht angepasst werden müssen.

Dem ersten Maschinencode 16 und dem zweiten Maschinencode 18 kann ein dritter Maschinencode 19 hinzugefügt werden, in dem weitere Funktionen in einer dritten Programmiersprache, z.B. in der Programmiersprache Java, realisiert sind. Es ist dabei nicht zweckmäßig, einen zugrundeliegenden Java-Programmcode 20 zunächst in einen Programmcode der Programmiersprache C umzuwandeln, und diesen dann mit Hilfe des Standard-C-Compilers in einen ausführbaren Maschinencode zu kompilieren. Üblicherweise wird man den Java-Programmcode 20 direkt mit Hilfe eines Java-Compiler oder vergleichbaren Werkzeugs in den ausführbaren Maschinencode 19 umwandeln. Damit jedoch die Meldungsformate, die in dem ursprünglichen PASCAL-Programmcode 10 definiert sind, auch für die in dem Java-Programmcode 20 realisierten Funktionen gelten, muss zusätzlich ein Java-Meldungsformat-Programmmodul 21 vorgesehen werden, das, kompiliert durch den Java-Compiler, dem kompilierten Java-Programmcode 19 mit Hilfe der Linker-Einheit hinzugefügt wird, um den dritten ausführbaren Maschinencode 19 zu erhalten. Vorteilhafterweise wird das Java-Meldungsformat-Programmodul 21 mit einem Generierungsmodul 23 erzeugt. Das Java-Meldungsformat-Programmmodul 21 sieht vor, dass auch die im Java-Programmcode 20 realisierten Funktionen die gleichen Meldungsformate wie der ursprüngliche PASCAL-Programmcode 10 erhalten.

Die C-Programmierplattform für das neue Betriebssystem 3' stellt vorzugsweise auch ein Hilfsprogramm für die Fehlersuche, z.B. einen Debugger, zur Verfügung. Der Debugger ist so gestaltet, dass er in den C-Programmcode 11 bzw. in den weiteren C-Programmcode 17 zusätzliche Debug-Befehle bzw. Kommentare einfügt. Gemäß einem Zusatzprogramm kann vorgesehen sein, dass die Debug-Funktionen auch auf den Pascal-Programmcode 10 ausgeführt werden, so dass der Pascal-Programmcode 10 mit Debug-Befehlen und vom Debugger generierten Kommentaren versehen wird.

Die in der vorangehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausgestaltungen wesentlich sein.

### Bezugszeichenliste

- 1: Telekommunikationsanlage
- 1': neue Telekommunikationsanlage
- 2: Hardware
- 2': veränderte Hardware
- 3: Betriebssystem
- 3': verändertes Betriebssystem
- 4: Funktionsprogramme
- 5: zusätzliche Funktionsprogramme
- 6: Adaptionsmodul
- 7: Prozessor
- 7': neuer Prozessor
- 8: Speicher
- 9: Peripherieelemente
- 10: PASCAL-Programmcode
- 11: C-Programmcode
- 12: Adaptions-Programmmodul
- 13: C-Meldungsformat-Programmmodul
- 14: Umwandlungsprogramm
- 15: Standard-C-Compiler
- 16: erster Maschinencode
- 17: weiterer C-Programmcode
- 18: zweiter Maschinencode
- 19: dritter Maschinencode
- 20: Java-Programmcode
- 21: Java-Meldungsformat-Programmmodul
- 22: C-Meldungsformat-Generierungsprogramm
- 23: Java-Meldungsformat-Generierungsprogramm

## Patentansprüche

1. Verfahren zur funktionsmäßigen Erweiterung einer Telekommunikationsanlage, die eine Betriebssystemumgebung (3') mit einer Recheneinheit (7') und einem Programmspeicher (8) zum Speichern eines von der Recheneinheit (7') ausführbaren Maschinencodes umfasst,
**gekennzeichnet durch** folgende Schritte:
a) Umwandeln eines ersten Programmcodes (10) einer ersten Programmiersprache mit einem Umwandlungsprogramm (14) in einen zweiten Programmcode (11) einer zweiten Programmiersprache;
b) Umwandeln des zweiten Programmcodes (11) in einen ersten Maschinencode (16);
c) Umwandeln eines dritten Programmcode (17) in der zweiten Programmiersprache in einen zweiten Maschinencode (18); und
d) Speichern des ersten Maschinencodes (16) und des zweiten Maschinencodes (18) im Programmspeicher (8).

2. Verfahren nach Anspruch 1, **dadurch gekennzeichnet, dass** die erste Programmiersprache eine PASCAL-Programmiersprache ist.

3. Verfahren nach Anspruch 1 oder 2, **dadurch gekennzeichnet, dass** die zweite Programmiersprache eine C/C++- Programmiersprache ist.

4. Verfahren nach einem der Ansprüche 1 bis 3, **dadurch gekennzeichnet, dass** dem ersten Programmcode (10) ein Meldungsformat zur Kommunikation mit Funktionselementen zugeordnet ist,
dass aus dem ersten Programmcode (10) ein Meldungsformat-Programmmodul (13) in der zweiten Programmiersprache von Hand oder automatisch erzeugt wird,
dass das Meldungsformat-Programmmodul (13) ein Meldungsformat des ersten Programmcodes (10) in der zweiten Programmiersprache darstellt, und
dass das Meldungsformat-Programmmodul (13) in einen Meldungsformat-Maschinencode umgewandelt wird.

5. Verfahren nach einem der Ansprüche 1 bis 4, **dadurch gekennzeichnet, dass** dem ersten Programmcode (10) ein Datenformat zur Darstellung von Daten zugeordnet ist,
dass aus dem ersten Programmcode (10) ein Datenformat-Programmmodul in der zweiten Programmiersprache von Hand oder automatisch erzeugt wird,
dass das Datenformat-Programmmodul ein Datenformat des ersten Programmcodes (10) in der zweiten Programmiersprache darstellt, und
dass das Datenformat-Programmmodul in einen Datenformat-Maschinencode umgewandelt wird.

6. Verfahren nach einem der Ansprüche 1 bis 5, **dadurch gekennzeichnet, dass** das Meldungsformat-Programmmodul (13) ein Meldungsformat zur Kommunikation mit Peripherieelementen (9') aufweist.

7. Verfahren nach einem der Ansprüche 1 bis 6, **dadurch gekennzeichnet, dass** ein Adaptions-Programmmodul (12) vorgesehen ist, das in einen Adaptions-Maschinencode umgewandelt wird, um im ersten Programmcode (10) enthaltene Aufrufe von Systemfunktionen einer ersten Programmumgebung in Aufrufe von Systemfunktionen einer zweiten Programmumgebung umzuwandeln.

8. Verfahren nach einem der Ansprüche 1 bis 7, **gekennzeichnet durch** folgende weitere Schritte:
Umwandeln eines vierten Programmcodes (20) einer dritten Programmiersprache in einen dritten Maschinencode (19); und
Speichern des dritten Maschinencodes (19) im Programmspeicher (22').

9. System zur funktionsmäßigen Erweiterung einer Telekommunikationsanlage (1) mit einer Recheneinheit (7') und mit einem Programmspeicher (8) zum Speichern eines von der Recheneinheit (7') ausführbaren Maschinencodes,
**gekennzeichnet durch**
eine erste Umwandlungseinheit zum Umwandeln eines ersten Programmcodes (10) einer ersten Programmiersprache in einen zweiten Programmcode einer zweiten Programmiersprache (11);
eine zweite Umwandlungseinheit zum Umwandeln des zweiten Programmcodes (11) in einen ersten Maschinencode (16);
eine dritte Umwandlungseinheit zum Umwandeln eines dritten Programmcode (17) der zweiten Programmiersprache in einen zweiten Maschinencode (18); und
eine Speichereinrichtung zum Speichern des ersten Maschinencodes (16) und des zweiten Maschinencodes (18) im Programmspeicher (8).

10. System nach Anspruch 9, **dadurch gekennzeichnet, dass** das System eine Meldungsformat-Generierungseinheit (22) zur Erzeugung eines Meldungsformat-Programmmodules (13) in der zweiten Programmiersprache aus dem ersten Programmcode (10) der ersten Programmiersprache aufweist,
dass das Meldungsformat-Programmmodul (13) ein den ersten Programmcode (10) betreffendes Meldungsformat zur Kommunikation mit Funktionselementen darstellt, und
dass die zweite Umwandlungseinheit das Umwandeln des Meldungsformat-Programmmodules (13) in einen Meldungsformat-Maschinencode durchführt, und dem ersten Maschinencode (16) und dem zweiten Maschinencode (18) hinzufügt.
